# EUROPEAN PATENT SPECIFICATION

(11) **EP 3 008 320 B1**
(45) Date of publication and mention of the grant of the patent: **29.07.2020**
(21) Application number: 13886677.7
(22) Date of filing: 14.06.2013
(51) Int. Cl.: F02K 1/12, F02K 1/80

(54) **VARIABLE-GEOMETRY CONVERGENT-DIVERGENT EXHAUST NOZZLE FOR A JET ENGINE AND METHOD FOR VARYING THE NOZZLE**
KONVERGENT-DIVERGENTE ABGASDÜSE MIT VARIABLER GEOMETRIE FÜR EIN STRAHLTRIEBWERK UND VERFAHREN ZUR ÄNDERUNG DER DÜSE
TUYÈRE D'ÉJECTION CONVERGENTE-DIVERGENTE À GÉOMÉTRIE VARIABLE POUR UN MOTEUR À RÉACTION ET PROCÉDÉ PERMETTANT DE MODIFIER LA TUYÈRE

(43) Date of publication of application: 20.04.2016
(73) Proprietor: SAAB AB, 581 88 Linköping (SE)
(72) Inventor: RÄF, Martin, 589 37 Linköping (SE)
(74) Representative: Zacco Sweden AB
(86) International application number: PCT/SE2013/050696
(87) International publication number: WO 2014/200402

(56) References cited:
- EP-A2- 1 956 225
- WO-A1-92/03649
- FR-A- 1 220 284
- FR-A1- 2 227 433
- GB-A- 984 925
- GB-A- 2 230 299
- US-A- 4 591 097
- US-A- 5 261 605
- US-A- 5 437 411
- US-A- 5 542 607
- US-A- 5 667 140
- US-A- 5 794 850
- US-A- 5 813 609
- US-A1- 2005 060 984
- US-A1- 2005 210 861
- US-A1- 2006 090 470

## Description

### TECHNICAL FIELD

The present invention relates to a variable-geometry convergent-divergent exhaust nozzle for a jet engine according to the preamble of claim 1. The invention also relates to an aircraft comprising a variable-geometry convergent-divergent exhaust nozzle and a method for varying a variable-geometry convergent-divergent exhaust nozzle for a jet engine.

### TECHNICAL BACKGROUND

Jet engines are widely used to power aircraft. Jet engines provide propulsive power by generating a high velocity stream of gas which is exhausted rearwards through an exhaust nozzle. Variable-geometry convergent-divergent exhaust nozzles are commonly used in aircrafts. A variable-geometry convergent-divergent exhaust nozzle comprises a convergent portion with a decreasing cross sectional area followed by a divergent portion with an increasing cross sectional area of the exhaust jet stream. The variable-geometry convergent-divergent exhaust nozzle comprises, between the convergent portion and the divergent portion, a cross sectional area called the nozzle throat area, and, at the end of the divergent portion (where the exhaust leaves the nozzle), a cross sectional area called the nozzle exit area.

The optimum nozzle throat area and nozzle exit area of an convergent-divergent exhaust nozzle depends on a variety of factors, such as the ambient conditions of temperature and pressure, and the mass flow of exhaust gas, which depends on the operating condition of the engine. In jet engines, in particular, engines having some sort of thrust augmentation such as an afterburner, it is desirable to cause a variation of the nozzle throat area and the nozzle flow exit area to maintain high engine performance under a wide range of operating conditions. The nozzle exit area divided by the nozzle throat area is called the nozzle area ratio. A higher nozzle area ratio gives higher exhaust velocity and higher thrust at subsonic speed, for example during take-off. A lower nozzle area ratio gives higher exhaust velocity and higher thrust at supersonic speed, for example during cruise at supersonic speed. The ideal nozzle area ratio allows the gases of combustion to exit the nozzle at optimal pressure compared to ambient pressure.

The variable-geometry convergent-divergent exhaust nozzle comprises flaps movable between a first position, wherein they together define a minimum nozzle throat area and a minimum nozzle exit area, and a second position, wherein they together define a maximum nozzle throat area and a maximum nozzle exit area.

One problem associated with variable-geometry convergent-divergent exhaust nozzles is that the displacement of a movable flap will result in gaps between the flap and its adjacent flaps. These gaps will allow leakage of the exhaust gas, which generates vortices and so reduces the nozzles efficiency and accordingly the performance of the jet engine.

An example of a known exhaust nozzle is disclosed in document US-A1-4591097. US- A1-4591097 discloses an improved thrust reverser/exhaust nozzle assembly that has a plurality of blocker devices located in a so called divergent section of the exhaust nozzle and a plurality of deflector devices located in a so called convergent section of the nozzle. The blocker and deflector devices are linked together such that they move simultaneously and maintain a substantially constant engine flow rate during transitions of the engine between forward and reverse thrust conditions. The exhaust nozzle assembly comprises flaps and these flaps are only in contact with each other when the flaps are in a fully closed position. When the flaps are not in a fully closed position there are gaps between the flaps.

Another example of a known exhaust nozzle is disclosed in document FR 2227433. FR 2227433 discloses a variable-geometry convergent-divergent nozzle for a jet engine comprising a plurality of first flap means pivotally connected to a fixed structure and a plurality of second flap means pivotally connected to the first flap means.

Variable-geometry convergent-divergent exhaust nozzles are complex in structure because they comprise many components that move relative to each other. This makes variable-geometry convergent-divergent exhaust nozzles expensive to design, manufacture, maintain and operate.

As a consequence, in light of the above drawbacks, there is a need of an improved variable-geometry convergent-divergent exhaust nozzle for a jet engine with increased nozzle efficiency and that is less expensive to design, manufacture, maintain and operate.

One object is to reduce the noise from the variable-geometry convergent-divergent exhaust nozzle.

One further object is to provide a failure safe variable-geometry convergent-divergent exhaust nozzle.

Another object is to provide a variable-geometry convergent-divergent exhaust nozzle with a throat cross section and an exit cross section that will assume the same shape in each of said positions.

The foregoing and other objects and advantages of the present invention will be apparent to those skilled in the art, in view of the following detailed description, taken in conjunction with the appended claims and the accompanying drawings.

### SUMMARY OF THE INVENTION

This has been solved by the variable-geometry convergent-divergent exhaust nozzle for a jet engine according to the characterizing features of claim 1.

This has also been solved by the aircraft comprising a variable-geometry convergent-divergent exhaust nozzle according to the characterizing features of claim 12 and the method for varying a variable-geometry convergent-divergent exhaust nozzle for a jet engine according to the steps of claim 13.

Suitably, the variable-geometry convergent-divergent exhaust nozzle for a jet engine comprises a fixed structure, a first cross sectional area, a second cross sectional area, a plurality of first flap means being pivotally connectable to the fixed structure and a plurality of second flap means being pivotally connected to the plurality of first flap means. The nozzle also comprises first actuator means being arranged to actuate said plurality of first flap means for variation of the first cross sectional area, i.e. the area inside the nozzle defined by said plurality of first flap means, between a first position and a second position, and second actuator means being arranged to actuate said plurality of second flap means for variation of the second cross sectional area, i.e. the area inside the nozzle defined by said plurality of second flap means, between a first position and a second position. It is possible to adjust the first cross sectional area and the second cross sectional area individually. The first cross sectional area may be the cross sectional area of the nozzle throat (the throat portion between the convergent portion and the divergent portion) and the second cross sectional area may be the cross sectional area of the nozzle exit. The respective first flap means comprises third flap means and fourth flap means each comprising a first sliding surface arranged in continuous contact with adjacent flap means during said variation. The respective second flap means comprises fifth flap means and sixth flap means each comprising a second sliding surface arranged in continuous contact with adjacent flap means during said variation. In this context "continuous contact" is defined by that the third and the fourth flap means as well as the fifth and sixth flap means are in contact with each other in every position between the first position and the second position. The first position may be a maximum position and the second position may be a minimum position.

Thereby no gaps will occur between a flap means and its adjacent flap means during said variation. This will prevent leakage of exhaust gas. The prevention of leakage of exhaust gas will increase the nozzles efficiency and accordingly increase the performance of the jet engine. The jet engines energy consumption and the noise from the variable-geometry convergent-divergent exhaust nozzle are also reduced.

Suitably, the third flap means is arranged to be in said continuous contact with an adjacent fourth flap means such that the third flap means, within an area defined by said first sliding surface, overlies the fourth flap means. Also the fifth flap means is suitably arranged to be in said continuous contact with an adjacent sixth flap means such that the fifth flap means, within an area defined by said second sliding surface, overlies the sixth flap means. In this context "overlies" is defined by that the third and fifth flap means is arranged in an outer periphery of the variable-geometry convergent-divergent exhaust nozzle and abuts the fourth and sixth flap means being arranged in an inner periphery of the variable-geometry convergent-divergent exhaust nozzle. The distance between the outer and inner periphery in radial direction may preferably be defined as half the thickness of a sheet metal of third and fifth flap means plus half the thickness of a sheet metal of fourth and six flap means. Preferably, each imaginary periphery line is thus defined as extending centrally in each flap means sheet metal and parallel with its plane.

This will further reduce the risk of gaps between a flap means and its adjacent flap means during said variation because the third and fifth flap means are overlying the fourth and sixth flap means and are counteracting the force from the jet stream. This will in turn further prevent leakage of exhaust gas and in turn further increase the nozzles efficiency and the performance of the jet engine. Thereby a sealing between the third flap means and the fourth flap means is provided and also a sealing between the fifth flap means and the sixth flap means is provided.

Preferably, the third flap means is being constituted of said first actuator means and the fifth flap means is being constituted of said second actuator means.

The force from the third and fifth flap means acting on the fourth and six flap means counteracts the jet stream force acting on said fourth and sixth flap means. Thus, providing an operationally reliable variable-geometry convergent-divergent exhaust nozzle of rigid and simple design capable of variation to any desired intermediate setting between the first and second position.

Preferably, the first and second actuator means comprises bent sheet metal (angled).

Suitably, the number of the third flap means is equal to the number of the fourth flap means and the number of fifth flap means is equal to the number of the sixth flap means.

Thus a third flap mean will always overlie two adjacent fourth flap means and a fifth flap mean will always overlie two adjacent sixth flap means. Thereby further reduce the risk of gaps between a flap means and its adjacent flap means during said variation. This will further prevent leakage of exhaust gas, which in turn will increase the nozzles efficiency and accordingly increase the performance of the jet engine.

In another aspect of the invention the first and second actuator means comprises an elongated actuator. In a further aspect of the invention the elongated actuator is a hydraul.

Suitably, the hydraul is cost-effective connected to the hydraulic system of the jet engine.

According to the invention said first and second actuator means each comprise two sliding surfaces, which are angularly arranged to each other with an angle α. The angle α being defined between two imaginary lines extending in a plane extending essentially parallel with said cross sectional areas. The angle α may also be defined as an angle between two imaginary lines, each of which lies in a plane orthogonally oriented relative the sliding surfaces.

In such way the variable-geometry convergent-divergent exhaust nozzles first cross section and second cross section will assume the same shape in each of said every position. In turn, the flow of exhaust gases through the exhaust nozzle is being optimized and the noise from the variable-geometry nozzle is reduced.

In another aspect of the invention said angle α is about 120°.

Thus providing a variable-geometry convergent-divergent nozzle that is less complex in structure because it comprises few components that move relative to each other. In turn this makes the variable-geometry convergent-divergent exhaust nozzle less expensive to design, manufacture, maintain and operate.

In a further aspect of the invention the flap means comprises resilient material.

The resilient material makes the flap means able to bend and capable of regaining their original shape after bending and thereby seals said sliding surfaces to each other. This reduces the risk of gaps between the flap means during said variation. Thus further preventing leakage of the exhaust gas and in turn further increase the nozzles efficiency and the performance of the jet engine. Also the noise from the variable-geometry convergent-divergent nozzle is reduced.

In yet another aspect of the invention said plurality of first flap means is pivotally connectable to the fixed structure with hinge means and said plurality of second flap means is pivotally connected to the plurality of first flap means with hinge means. Hinge means arranged pivotally about axes extending in a plane essentially parallel with said cross sectional areas.

Said hinge means permits an angle of rotation between said plurality of first flap means and the fixed structure as well as between said plurality of second flap means and the plurality of first flap means, which allows for variation of the nozzles first and second cross sectional area between a first position and a second position. Thus providing an operationally reliable variable-geometry convergent-divergent exhaust nozzle of rigid and simple design that is cost effective to manufacture and easy to maintain.

In another aspect of the invention a first sealing is arranged between the third flap means and the fourth flap means for sealing said first sliding surfaces and a second sealing is arranged between the fifth flap means and the sixth flap means for sealing said second sliding surfaces.
This reduces the risk of gaps between the flap means during said variation. Thus further preventing leakage of exhaust gas and in turn further increase the nozzles efficiency and the performance of the jet engine. Also the noise from the variable-geometry convergent-divergent nozzle is reduced.

In yet another aspect of the invention a downstream edge of the convergent-divergent exhaust nozzle forming said area is symmetric.

Thereby it is easier to integrate two jet engines in an aircraft.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims. The variable-geometry convergent-divergent exhaust nozzle according to the invention can also constitute a nozzle for reducing infra-red or radar cross section signature of the nozzle. Other objectives, embodiments and advantages of the present invention are described in closer detail in the description and in the subsequent patent claims.

### BRIEF DESCRIPTION OF THE DRAWINGS

The invention will hereinafter be described with reference to embodiments of the present invention and the accompanying schematic drawings, in which:
- Fig. 1: shows a side view of a jet engine comprising a variable-geometry convergent-divergent exhaust nozzle according to one aspect of the present invention,
- Fig. 2: shows a perspective view of a variable-geometry convergent-divergent exhaust nozzle in a first embodiment and in a first position according to one aspect of the present invention,
- Fig. 3: shows a perspective view of a variable-geometry convergent-divergent exhaust nozzle in a first embodiment and in a second position according to one aspect of the present invention,
- Fig. 4: shows a perspective view of a variable-geometry convergent-divergent exhaust nozzle in a second embodiment and in a first position according to one aspect of the present invention,
- Figs. 5a-b: shows a cross-sectional view of a variable-geometry convergentdivergent exhaust nozzle according to different aspects of the present invention,
- Figs. 6a-g: show cross-sectional views of variable-geometry convergent-divergent exhaust nozzles according to different aspects of the present invention,
- Figs. 7a-c: show enlarged views of variable-geometry convergent-divergent exhaust nozzles according to different aspects of the present invention, taken in cross-section A-A in fig. 2,
- Fig. 8: shows a variable-geometry convergent-divergent exhaust nozzle according to one aspect of the present invention integrated in an airframe,
- Fig. 9: shows a variable-geometry convergent-divergent exhaust nozzle according to one aspect of the present invention enclosed by an outer exhaust nozzle, and
- Figs. 10a-b: shows flow charts of a method for varying a variable-geometry convergent-divergent exhaust nozzle for a jet engine according to the present invention.

### DETAILED DESCRIPTION OF THE INVENTION

Hereinafter, embodiments of the present invention will be described in detail by means of examples with reference to the accompanying drawings, wherein for the sake of clarity and understanding of the invention some details of no importance are deleted from the drawings. The same reference numbers may have been used for the same or similar features throughout the description of the embodiments disclosed below.

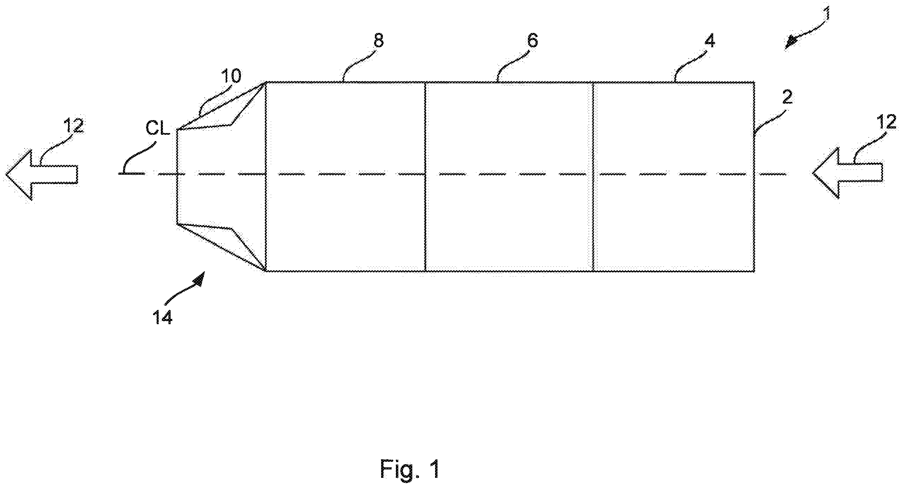

Fig. 1 shows a jet engine 1 comprising an air inlet 2, a compressor section 4, a combustion section 6, a turbine section 8 and possible afterburner section and an exhaust section 10. Air 12 entering the jet engine 1 through the air inlet 2, being compressed when passing through the compressor section 4. The air 12 is heated for power generating functionality in the combustion section 6. It thereafter passes through the turbine section 8 in a power extraction function and, if present, through the afterburning section in a power generation function and is finally exhausted through the exhaust section 10. The exhaust section 10 comprises the variable-geometry convergent-divergent exhaust nozzle 14 according to one aspect of the present invention.

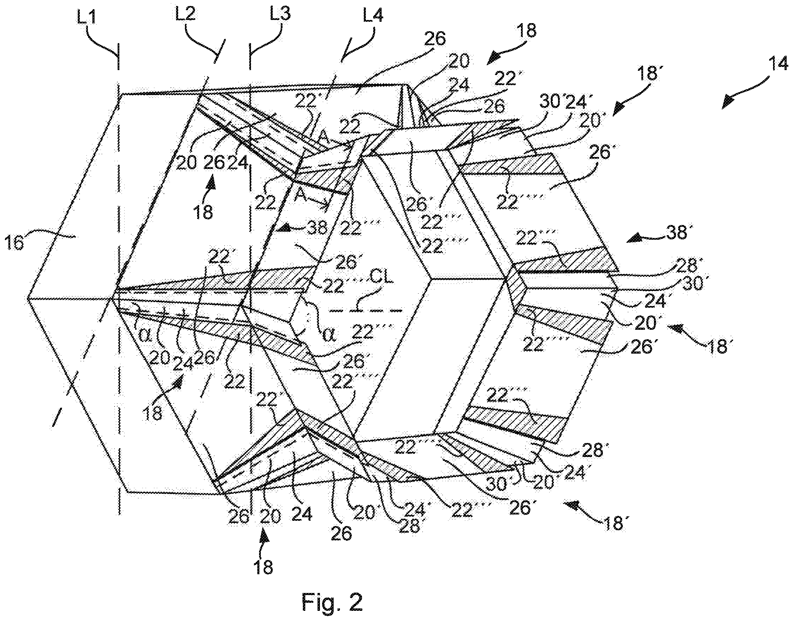

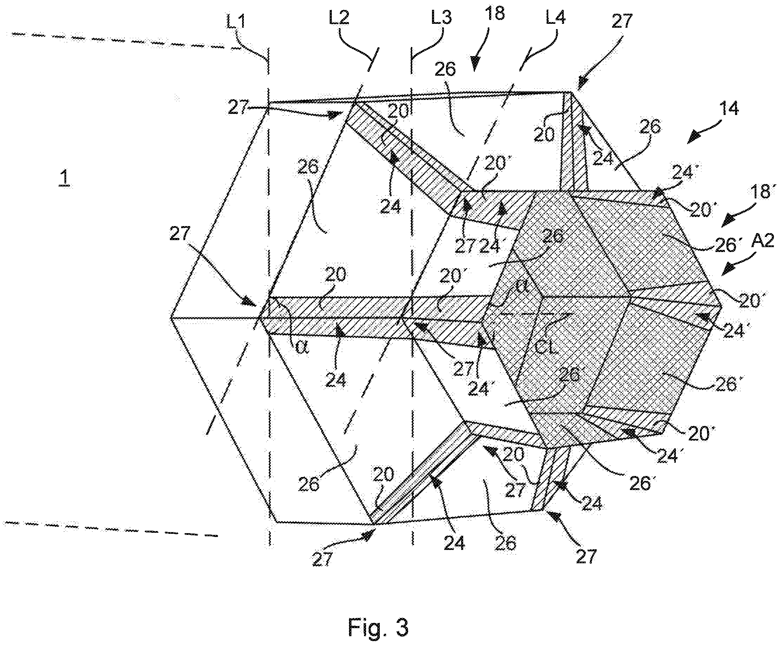

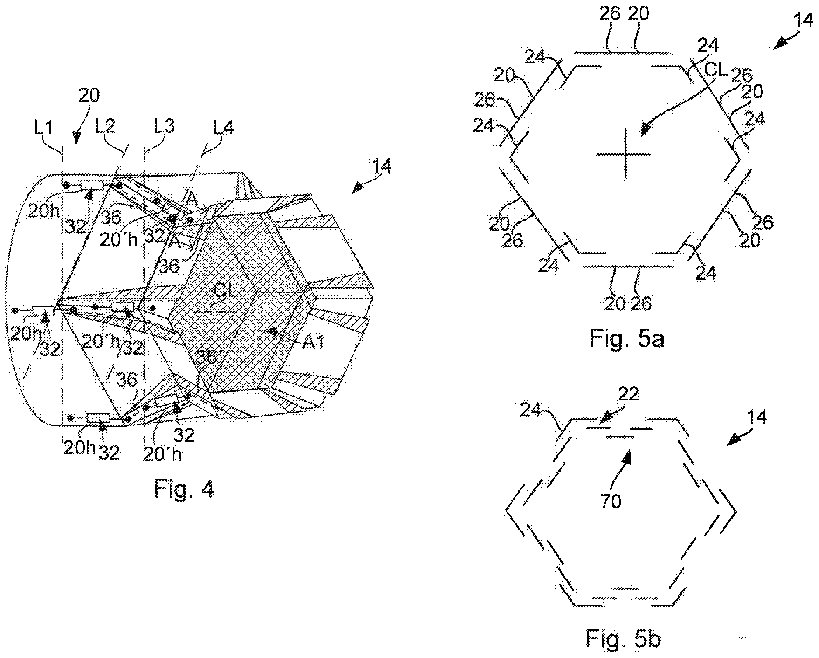

Fig. 2 shows a perspective view of a variable-geometry convergent-divergent exhaust nozzle 14 according to a first embodiment and in a first position. The variable-geometry convergent-divergent exhaust nozzle 14 will be described with reference to both fig. 2 and fig. 3, which figures show a perspective view of a variable-geometry convergent-divergent exhaust nozzle 14 according to the first embodiment and in a first and second position respectively. The variable-geometry convergent-divergent exhaust nozzle 14 for a jet engine 1 comprises a fixed structure 16 with a hexagonal shape. The fixed structure 16 can have other shapes as well, for example a squared, circular (as shown in fig. 4) or pentagonal shape.

The variable-geometry convergent-divergent exhaust nozzle 14 further comprises a plurality of first flap means 18 and a plurality of second flap means 18', which are circumferentially arranged about and extending along a central axis CL of the fixed structure 16. The plurality of first flap means 18 being pivotally connectable (hinged) to the fixed structure 16 and the plurality of second flap means 18' being pivotally connected (hinged) to the plurality of first flap means 18. The variable-geometry convergent-divergent exhaust nozzle 14 further comprise first actuator means 20 being arranged to actuate said plurality of first flap means 18, for variation of the nozzles 14 first cross sectional area A1 (as seen in fig. 4) between the first position and the second position, and second actuator means 20' being arranged to actuate said plurality of second flap means 18' for variation of the nozzles 14 second cross sectional area A2 (as seen in fig. 3) between the first position and the second position. The actuator means 20, 20' (in this embodiment angled sheet metal controlled by hydrauls) (bent elongated sheet metal forming actuate or obtuse angle seen in a plane transverse said elongation) is arranged to operate all flap means 18, 18' simultaneously. The first cross sectional area A1 and the second cross sectional area A2 can be varied individually. The plurality of first flap means 18 are individually adjustable in angular position with respect to the fixed structure 16 by rotation of each third flap means 24 about an axis L1 and by rotation of each fourth flap means 26 about an axis L2. The plurality of second flap means 18' are individually adjustable in angular position with respect to the plurality of first flap means 18 by rotation of each fifth flap means 24' about an axis L3 and by rotation of each sixth flap means 26' about an axis L4. The flap means 18, 18' defines a maximum exhaust area in the first position and a minimum exhaust area in the second position.

Said plurality of first flap means 18, 24, 26 is pivotally connectable to the fixed structure with hinge means 27 and said plurality of second flap means 18', 24', 26' is also pivotally connected to the plurality of first flap means 18, 24, 26 with hinge means 27 as is shown in fig. 3. The flap means comprise resilient material. For example, the flap means 18, 18' comprise ceramic material, steel, aluminium, titanium, nickel alloy or other materials, which is flexible enough to permit the flap means 18, 18' to flex when the variable-geometry convergent-divergent exhaust nozzle 14 is adjusted between the first and the second position. The jet stream of the jet engine 1, during use, tends to press the flap means 26, 26' radially outwardly. The flap means 26, 26' is therefore also sufficiently stiff to resist pressure loads from the jet engines 1 jet stream during use. Preferably, the flap means 18, 18' also comprises heat-resistant material due to that the flap means 18, 18' is subjected to high heat from the jet engines 1 jet stream. The respective plurality of first flap means 18 comprises third flap means 24 and fourth flap means 26 each comprising a first sliding surface 22, 22' arranged in continuous contact with adjacent flap means 18 during said variation. The third flap means 24 is arranged to be in said continuous contact with the adjacent fourth flap means 26 such that the third flap means 24, within an area defined by said first sliding surface 22, 22', overlies the fourth flap means 26. The respective plurality of second flap means 18' comprises fifth flap means 24' and sixth flap means 26' each comprising a second sliding surface 22"", 22"" arranged in continuous contact with adjacent flap means 18' during said variation. The fifth flap means 24' is arranged to be in said continuous contact with the adjacent sixth flap means 26' such that the fifth flap means 24', within an area defined by said second sliding surface 22"", 22"", overlies the sixth flap means 26'.

The number of third flap means 24 is preferably equal to the number of fourth flap means 26 and the number of fifth flap means 24' is preferably equal to the number of sixth flap means 26'. Preferably, the number of third flap means 24, fourth flap means 26, fifth flap means 24'and sixth flap means 26' is six. The third flap means 24 of the variable-geometry convergent-divergent nozzle 14 is being constituted of said first actuator means 20 and the fifth flap means 24' of the variable-geometry convergent-divergent nozzle 14 is being constituted of said second actuator means 20'. The fourth flap means 26 is pressed outwardly against the third flap means 24 and the sixth flap means 26' is pressed outwardly against the fifth flap means 24' during use. Said first actuator means 20 comprises two sliding surfaces 28, 30 (not shown) which are angularly arranged to each other with an angle α and said second actuator means 20' comprises two sliding surfaces 28', 30', which are angularly arranged to each other with the angle α. Said angle α is preferably about 120°. Thereby giving the variable-geometry convergent-divergent exhaust nozzle 14 hexagonal cross sections. A hexagonal shape of the cross sections is a more aerodynamic shape and reduces the aerodynamic noise from the variable-geometry convergent-divergent exhaust nozzle 14. A first downstream edge 38 forming said first area A1 and a second downstream edge 38' forming said second area A2 are symmetric. Embodiments described in figs. 2 and 3 do not comprise additional sealing elements (see fig. 4).

Fig. 4 shows a perspective view of a variable-geometry convergent-divergent nozzle 14 in a second embodiment and in a first position. The first embodiment and the second embodiment of the variable-geometry convergent-divergent exhaust nozzle 14 is the same except from that the actuator means 20h, 20'h of the variable-geometry exhaust nozzle 14 in the second embodiment comprises an elongated actuator 32, in this embodiment a hydraul, and that the variable-geometry convergent-divergent exhaust nozzle 14 comprises a first sealing 36 arranged between the third flap means 24 and the fourth flap means 26 and a second sealing 36' arranged between the fifth flap means 24' and the sixth flap means 26' for sealing said sliding surfaces 22, 22", 22"', 22"" thus making the variable-geometry exhaust nozzle 14 less leak prone. Hydrauls are connected between the second actuator means 20' and the first actuator means 20. It is also possible to connect the hydrauls between the second actuator means 20' and the fixed structure 16.

Fig. 5a shows a cross-sectional view of a variable-geometry convergent-divergent exhaust nozzle 14 in a third embodiment according to the present invention. The third embodiment of the variable-geometry convergent-divergent exhaust nozzle 14 is the same as the first and second embodiment of the variable-geometry convergent-divergent exhaust nozzle 14 except from that the fourth flap means 26 are overlying the third flap means 24 and are being constituted of said first actuator means 20. The sixth flap means 26' are also overlying the fifth flap means 24' and are being constituted of said second actuator means 20' (not shown). The advantage with the third embodiment is that the fourth flap means 26 and the sixth flap means 26' has longer hinge lines than the third flap means 24 and the fifth flap means 24' thus providing a variable-geometry convergent-divergent nozzle 14 of a more stable design. Fig. 5b shows a cross-sectional view of a variable-geometry exhaust nozzle according to another aspect of the present invention. It is possible for the nozzle 14 to comprise additional flap means 70.

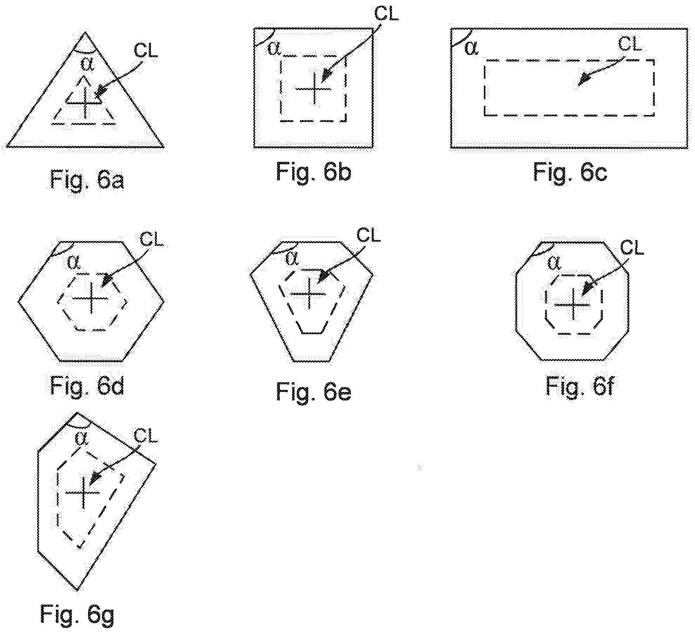

Fig. 6a shows a cross-sectional view of a variable-geometry convergent-divergent exhaust nozzle 14 in a fourth embodiment according to the present invention. Fig. 6b shows a cross sectional view of a variable-geometry convergent-divergent exhaust nozzle 14 in a fifth embodiment according to the present invention. Fig. 6c shows a cross-sectional view of a variable-geometry convergent-divergent exhaust nozzle 14 in a sixth embodiment according to the present invention. Fig. 6d shows a cross-sectional view of a variable-geometry convergent-divergent exhaust nozzle 14 in the first, second and third embodiment according to the present invention. Fig. 6e shows a cross-sectional view of a variable-geometry convergent-divergent exhaust nozzle 14 in a seventh embodiment according to the present invention. Fig. 6f shows a cross-sectional view of a variable-geometry convergent-divergent exhaust nozzle 14 in an eight embodiment according to the present invention. Fig. 6g shows a cross-sectional view of a variable-geometry convergent-divergent exhaust nozzle 14 in a ninth embodiment according to the present invention.

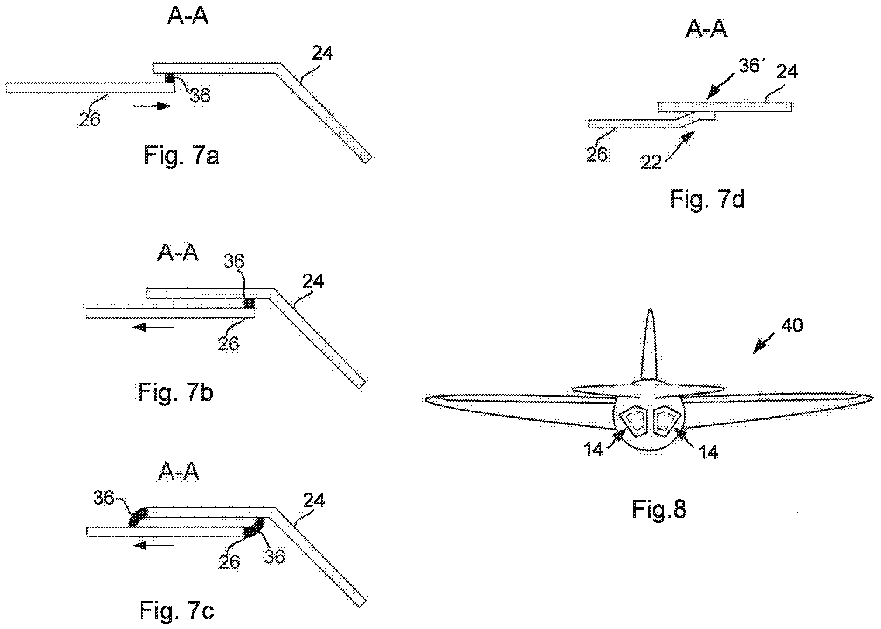

The variable-geometry convergent-divergent exhaust nozzles 14 cross section in fig. 6a is triangular, symmetric and has equal angles α, the cross section in fig 6b is squared, symmetric and has equal angles α, the cross section in fig. 6c is rectangular, symmetric and has equal angles α, the cross section in fig. 6d is hexagonal, symmetric and has equal angles α, the cross section in fig. 6e is hexagonal, symmetric and do not have equal angles α, the cross section in fig. 6f is octagonal, symmetric and has equal angles α, and the cross section in fig. 6g is pentagonal and asymmetric. Said first position is shown in solid lines and said second position is shown in dashed lines. It is possible for the variable-geometry convergent-divergent exhaust nozzles 14 cross section to have any desired shape thus providing a variable-geometry convergent-divergent exhaust nozzle 14 that is easy to integrate in an airframe 40 (shown in fig. 8). Thereby it is not needed to adapt the design of the airframe 40 to the shape of the variable-geometry convergent-divergent exhaust nozzle 14.

Fig. 7a - 7d shows an enlarged view of a variable-geometry convergent-divergent exhaust nozzle 14 according to different aspects and in cross-section A-A from fig. 2. Fig. 7a shows the variable-geometry convergent-divergent exhaust nozzle 14 in the first position. Fig. 7b and 7c shows the variable-geometry convergent-divergent exhaust nozzle 14 in the second position. Fig. 7d shows the variable-geometry convergent-divergent exhaust nozzle 14 in a position between the first and second position. It is the divergent portion that is shown in fig. 7a-d and described hereafter, but the same is also applicable for the convergent portion. The arrows show the third flap means 24 direction of movement. As described before the variable-geometry convergent-divergent exhaust nozzle 14 can comprise a first sealing 36 arranged between the third flap means 24 and the fourth flap means 26 thus making the variable-geometry convergent-divergent exhaust nozzle 14 less leak prone. The first sealing 36 is preferably attached to the fourth flap means 26 or integrated with the fourth flap means 26 and is sliding along the surface of the third flap means 24. Preferably, the first sealing 36 comprise ceramic material thus providing a heat resistant and wear resistant sealing 36. The first sealing 36 in fig. 7c is arcuated and fig. 7c shows two sealings. It is possible for the first sealing 36 shown in fig. 7a and 7b to be moveably arranged between the third flap means 24 and the fourth flap means 26. If the third flap means 24 or the fourth flap means 26 comprises a non rigid material a seal 36' (shown in fig. 7d) between the third flap means 24 and the fourth flap means 26 can be provided by means of arcuated edges or a simple joggle of the edge of the fourth flap means 26.

Fig. 8 shows two variable-geometry convergent-divergent exhaust nozzles 14 according to one aspect integrated in an airframe 40.

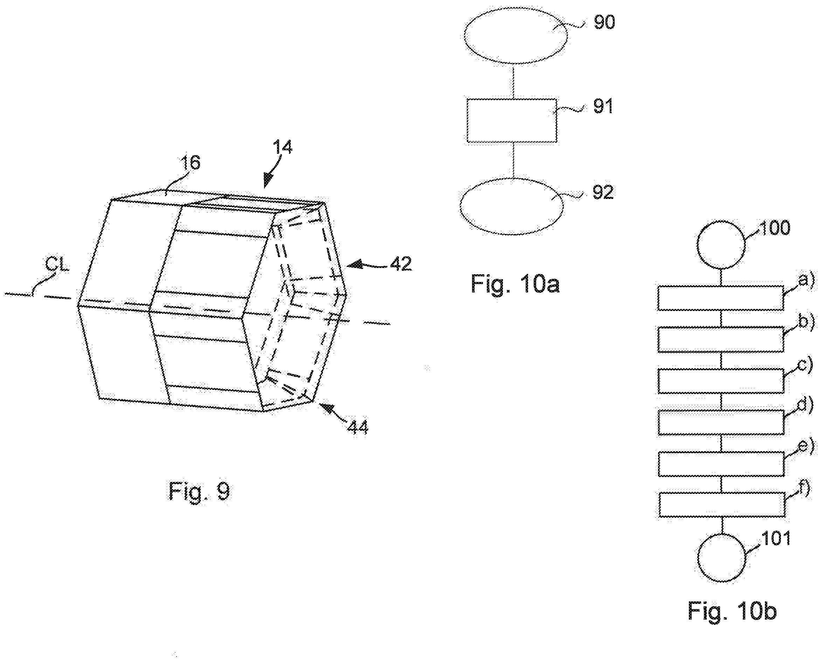

Fig. 9 shows a variable-geometry convergent-divergent exhaust nozzle 14 according to one aspect enclosed by an outer exhaust nozzle 42. The variable-geometry convergent-divergent exhaust nozzle 14 and the outer nozzle 42 are in this embodiment attached to each other with hinge means 44. It is also possible to not attach them to each other and instead slidingly arrange them to each other.

Fig. 10a illustrates a flow chart of a method for varying a variable-geometry convergent-divergent exhaust nozzle 14 for a jet engine 1, according to one aspect of the invention. The method starts in Step 90. In Step 91 is provided a method for varying a variable-geometry convergent-divergent exhaust nozzle 14 for a jet engine 1. In Step 92 the method is fulfilled.

Fig. 10b shows a flow chart of the method for varying a variable-geometry convergent-divergent exhaust nozzle 14 for a jet engine 1 according to the present invention. The method comprises the steps of:
100) Starting of the method.
   a) Providing a plurality of first flap means 18 (as described in previous figures) by arranging the first flap means 18 to the fixed structure via hinges and providing a plurality of second flap means 18' (as described in previous figures) by arranging the second flap means 18' to the first flap means 18 via hinges.
   b) Actuating said flap means 18, 18' for variation of the nozzles 14 cross sectional areas (as described in previous figures) between a first position and a second position by means of actuator means 20, 20' (as described in previous figures), wherein the respective plurality of first flap means 18 comprises third flap means 24 and fourth flap means 26 and wherein the respective plurality of second flap means 18'comprises fifth flap means 24' and sixth flap means 26'. The third flap means 24 overlies and acts on the fourth flap means 26 and the fifth flap means 24'overlies and acts on the sixth flap means 26'. The flap means is made of sheet metal. The actuator means 20, 20' comprises a hydraul.
   c) Providing a first sliding surface 22, 22' (as described in previous figures) on each first flap means 18 to provide a continuous contact by means of said sliding surfaces 22, 22' during said variation and providing a second sliding surface 22"', 22"" (as described in previous figures) on each second flap means 18' to provide a continuous contact by means of said second sliding surfaces 22'", 22"" during said variation.
   d) Actuating a third flap means 24 of the first flap means 18 by means of the first actuator means 20 and actuating a fifth flap means 24'of the second flap means 18' by means of the second actuator means 20' to provide said variation.
   e) Providing an inner surface on a fourth flap means 26 and on a sixth flap means 26'.
   f) Actuating said fourth flap means 26 and said sixth flap means 26' by means of a counteracting jet stream force from the jet engine 1 during use.
101) Stopping of the method.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims. It is possible for one hydraul to actuate one flap means. It is also possible for one hydraul to actuate two or more flap means. The elongated actuator can also comprise a pneumatic actuator. It is also possible for the actuator means to comprise an electric engine or be cable-operated. The rotation of all flap means occurs at the same time, i.e. synchronously. Preferably, all flap means rotate with the same angular velocity. But it is also possible for the flap means to not rotate with the same angular velocity, for example for asymmetric nozzles. The actuator means in the form of an angled flap does not need to be metal sheet. It can be of forgings, ceramic, steel, aluminium, titanium, nickel or alloy as well. The actuator means can also comprise an elongated block shaped arm exhibiting towards each other angled surfaces acting as the sliding surfaces.

## Claims

1. A variable convergent-divergent exhaust nozzle (14) for a jet engine (1), comprising a fixed structure (16), a first cross sectional area (A1), a second cross sectional area (A2), a plurality of first flap means (18) being pivotally connectable to the fixed structure (16), a plurality of second flap means (18') being pivotally connected to the plurality of first flap means (18), first actuator means (20, 20h) being arranged to actuate said first flap means (18) for variation of the nozzles (14) first cross sectional area (A1) between a first position and a second position, second actuator means (20', 20'h) being arranged to actuate said second flap means (18') for variation of the nozzles (14) second cross sectional area (A2) between a first position and a second position
**characterized in that**
said first actuator means (20) comprises two sliding surfaces (28, 30), said second actuator means (20') comprises two sliding surfaces (28', 30'), wherein the two sliding surfaces (28, 30) of said first actuator means (20) are angularly arranged to each other with an angle (α) and the two sliding surfaces (28', 30') of said second actuator means (20') are angularly arranged to each other with the same angle (α),
the respective first flap means (18) comprises third flap means (24) and fourth flap means (26), each comprising a first sliding surface (22, 22') arranged in continuous contact with adjacent first flap means (18) during said variation,
the respective second flap means (18') comprises fifth flap means (24') and sixth flap means (26'), each comprising a second sliding surface (22'", 22""') arranged in continuous contact with adjacent second flap means (18') during said variation,
wherein the third flap means (24) is arranged to be in said continuous contact with the adjacent fourth flap means (26) such that the third flap means (24), within an area defined by said first sliding surface (22, 22'), overlies the fourth flap means (26), wherein the fifth flap means (24') is arranged to be in said continuous contact with an adjacent sixth flap means (26') such that the fifth flap means (24'), within an area defined by said sliding surface (22'", 22""), overlies the sixth flap means (26'),
wherein the first cross sectional area (A1) and the second cross sectional area (A2) are hexagonal or
pentagonal and asymmetric, or
squared, symmetric and has equal angles (α), or
rectangular, symmetric and has equal angles (α), or
triangular, symmetric and has equal angles (α).

2. The nozzle (14) according to claim 1 , **characterized in that** the third flap means (24) is being constituted of said first actuator means (20) and **in that** the fifth flap means (24') is being constituted of said second actuator means (20').

3. The nozzle (14) according to any of the above claims, **characterized in that** the number of the third flap means (24) is equal to the number of the fourth flap means (26) and **in that** the number of fifth flap means (24') is equal to the number of sixth flap means (26').

4. The nozzle (14) according to any of the above claims, **characterized in that** the first actuator means (20) and the second actuator means (20') comprises an elongated actuator (32).

5. The nozzle (14) according to claim 4, **characterized in that** the elongated actuator (32) is a hydraul.

6. The nozzle (14) according to claim 1, **characterized in that** said angle (α) is about 120°.

7. The nozzle (14) according to any of the above claims, **characterized in that** the flaps means (18, 18', 24, 24', 26, 26') comprises resilient material.

8. The nozzle (14) according to any of the above claims, **characterized in that** said first flap means (18, 24, 26) is pivotally connectable to the fixed structure with hinge means and **in that** said second flap means (18', 24', 26') is pivotally connected to the first flap means (18, 24, 26) with hinge means.

9. The nozzle (14) according to any of the above claims, **characterized in that** further comprising a first sealing (36) arranged between the third flap means (24) and the fourth flap means (26) for sealing said first sliding surfaces (22, 22') and **in that** further comprising a second sealing (36') arranged between the fifth flap means (24') and the sixth flap means (26') for sealing said second sliding surfaces (22'", 22"")

10. The nozzle (14) according to any of the above claims, **characterized in that** a first downstream edge (38) forming said first area (A1) and a second downstream edge (38') forming said second area (A2) are symmetric.

11. The nozzle (14) according to any of the above claims, **characterized in that** the first actuator means (20) and the second actuator means (20') are angled sheet metal.

12. An aircraft comprising a nozzle (14) according to claim 1.

13. A method for varying a variable convergent-divergent exhaust nozzle (14) for a jet engine (1), comprising the steps:
a) providing a plurality of first flap means (18) and a plurality of second flap means (18'),
b) actuating said plurality of first flap means (18) for variation of the nozzles (14) first cross sectional area (A1) between a first position and a second position by means of a first actuator means (20, 32, 20h) and actuating said plurality of second flap means (18') for variation of the nozzles (14) second cross sectional area (A2) between a first position and a second position by means of a second actuator means (20', 32, 20'h,), wherein the respective plurality of first flap means (18) comprises third flap means (24) and fourth flap means (26), wherein the respective plurality of second flap means (18') comprises fifth flap means (24') and sixth flap means (26'), wherein the third flap means (24) overlies and acts on the fourth flap means (26) and wherein the fifth flap means (24') overlies and acts on the sixth flap means (26'),
wherein said first actuator means (20) comprises two sliding surfaces (28, 30), wherein said second actuator means (20') comprises two sliding surfaces (28', 30'), wherein the two sliding surfaces (28, 30) of said first actuator means (20) are angularly arranged to each other with an angle (α) and the two sliding surfaces (28', 30') of said second actuator means (20') are angularly arranged to each other with the same angle (α), wherein the first cross sectional area (A1) and the second cross sectional area (A2) are
hexagonal or
pentagonal and asymmetric, or
squared, symmetric and has equal angles (α), or
rectangular, symmetric and has equal angles (α), or
triangular, symmetric and has equal angles (α),
c) providing a continuous contact between adjacent first flap means (18) via a first sliding surface (22, 22') of respective first flap means (18) during said variation and providing a continuous contact between adjacent second flap means (18') via a second sliding surface (22'", 22"") of respective second flap means (18') during said variation.

14. The method according to claim 13, further comprising the step:
d) actuating a third flap means (24) of the first flap means (18) by means of the first actuator means (20) to provide said variation and actuating a fifth flap means (24') of the second flap means (18') by means of the second actuator means (20) to provide said variation.

15. The method according to claim 13 or 14, further comprising the steps:
e) providing an inner surface on a fourth flap means (26) and on a sixth flap means (26'),
f) actuating said fourth flap means (26) and said sixth flap means (26') by means of a counteracting jet stream force from the jet engine (1) during use.

16. The method according to any of claims 13-15, wherein the step b) is being performed by the third flap means (24) that overlies the fourth flap means (26), wherein the third flap means (24) are acting on the fourth flap means (26), and by the fifth flap means (24') that overlies the sixth flap means (26'), wherein the fifth flap means (24') are acting on the sixth flap means (26').

## Patentansprüche

1. Variierbare konvergent-divergente Abgasdüse (14) für ein Strahltriebwerk (1), umfassend eine feststehende Struktur (16), einen ersten Querschnittsbereich (A1), einen zweiten Querschnittsbereich (A2), eine Vielzahl von ersten Klappeneinrichtungen (18), die drehbar mit der feststehenden Struktur (16) verbindbar sind, eine Vielzahl von zweiten Klappeneinrichtungen (18'), die schwenkbar mit der Vielzahl von ersten Klappeneinrichtungen (18) verbunden sind, erste Betätigungseinrichtungen (20 20h), die angeordnet sind, um die ersten Klappeneinrichtungen (18) zum Variieren des ersten Querschnittsbereichs (A1) der Düsen (14) zwischen einer ersten Position und einer zweiten Position zu betätigen, zweite Betätigungseinrichtungen (20', 20'h), die angeordnet sind, um die zweiten Klappeneinrichtungen (18') zum Variieren des zweiten Querschnittsbereichs (A2) der Düsen (14) zwischen einer ersten Position und einer zweiten Position zu betätigen,
**dadurch gekennzeichnet, dass**
die ersten Betätigungseinrichtungen (20) zwei Gleitflächen (28, 30) umfassen, die zweiten Betätigungseinrichtungen (20') zwei Gleitflächen (28', 30') umfassen, wobei die beiden Gleitflächen (28, 30) der ersten Betätigungseinrichtungen (20) winklig zueinander unter einem Winkel (a) angeordnet sind und die beiden Gleitflächen (28', 30') der zweiten Betätigungseinrichtungen (20') unter dem gleichen Winkel (a) winklig zueinander angeordnet sind,
wobei die jeweiligen ersten Klappeneinrichtungen (18) dritte Klappeneinrichtungen (24) und vierte Klappeneinrichtungen (26) umfassen, die jeweils eine erste Gleitfläche (22, 22') umfassen, die in kontinuierlichem Kontakt mit benachbarten ersten Klappeneinrichtungen (18) während dem Variieren angeordnet sind,
wobei die jeweiligen zweiten Klappeneinrichtungen (18') fünfte Klappeneinrichtungen (24') und sechste Klappeneinrichtungen (26') umfassen, die jeweils eine zweite Gleitfläche (22'", 22""') umfassen, die in kontinuierlichem Kontakt mit benachbarten zweiten Klappeneinrichtungen (18') während dem Variieren angeordnet sind, wobei die dritten Klappeneinrichtungen (24) so angeordnet sind, dass sie in kontinuierlichem Kontakt mit den benachbarten vierten Klappeneinrichtungen (26) stehen, so dass die dritten Klappeneinrichtungen (24) innerhalb eines durch die erste Gleitfläche (22, 22') definierten Bereichs die vierten Klappeneinrichtungen (26) überlagern, wobei die fünften Klappeneinrichtungen (24') so angeordnet sind, dass sie in kontinuierlichem Kontakt mit einer benachbarten sechsten Klappeneinrichtung (26') stehen, so dass die fünften Klappeneinrichtungen (24') innerhalb eines durch die Gleitfläche (22'", 22"") definierten Bereichs die sechste Klappeneinrichtung (26') überlagern,
wobei der erste Querschnittsbereich (A1) und der zweite Querschnittsbereich (A2) sechseckig oder
fünfeckig und asymmetrisch oder
quadratisch, symmetrisch und mit gleichen Winkeln (a) oder
rechteckig, symmetrisch und mit gleichen Winkeln (a) oder
dreieckig, symmetrisch und mit gleichen Winkeln (a) sind.

2. Düse (14) nach Anspruch 1, **dadurch gekennzeichnet, dass** die dritten Klappeneinrichtungen (24) aus den ersten Betätigungseinrichtungen (20) gebildet sind, **dass** die fünften Klappeneinrichtungen (24') aus den zweiten Betätigungseinrichtungen (20') gebildet sind.

3. Düse (14) nach einem der vorgehenden Ansprüche, **dadurch gekennzeichnet, dass** die Anzahl der dritten Klappeneinrichtungen (24) gleich der Anzahl der vierten Klappeneinrichtungen (26) ist und, **dass** die Anzahl der fünften Klappeneinrichtungen (24') gleich der Anzahl der sechsten Klappeneinrichtungen (26') ist.

4. Düse (14) nach einem der vorgehenden Ansprüche, **dadurch gekennzeichnet, dass** die ersten Betätigungseinrichtungen (20) und die zweiten Betätigungseinrichtungen (20') einen länglichen Betätigungs (32) umfassen.

5. Düse (14) nach Anspruch 4, **dadurch gekennzeichnet, dass** der längliche Betätigungs (32) ein Hydraul ist.

6. Düse (14) nach Anspruch 1, **dadurch gekennzeichnet, dass** der Winkel (a) etwa 120° beträgt.

7. Düse (14) nach einem der vorgehenden Ansprüche, **dadurch gekennzeichnet, dass** die Klappeneinrichtungen (18, 18', 24, 24', 26, 26') elastisches Material umfassen.

8. Düse (14) nach einem der vorgehenden Ansprüche, **dadurch gekennzeichnet, dass** die ersten Klappeneinrichtungen (18, 24, 26) durch Scharniereinrichtungen drehbar mit der feststehenden Struktur verbindbar sind und, **dass** die zweiten Klappeneinrichtungen (18', 24', 26') durch Scharniereinrichtungen drehbar mit den ersten Klappeneinrichtungen (18, 24, 26) verbunden sind.

9. Düse (14) nach einem der vorgehenden Ansprüche, **dadurch gekennzeichnet, dass** sie ferner eine zwischen den dritten Klappeneinrichtungen (24) und den vierten Klappeneinrichtungen (26) angeordnete erste Dichtung (36) zum Abdichten der ersten Gleitflächen (22, 22') umfasst und, **dass** sie ferner eine zwischen den fünften Klappeneinrichtungen (24') und den sechsten Klappeneinrichtungen (26') angeordnete zweite Dichtung (36') zum Abdichten der zweiten Gleitflächen (22'", 22"") umfasst.

10. Düse (14) nach einem der vorgehenden Ansprüche, **dadurch gekennzeichnet, dass** eine erste stromabwärtige Kante (38), die den ersten Bereich (A1) bildet, und eine zweite stromabwärtige Kante (38'), die den zweiten Bereich (A2) bilden, symmetrisch sind.

11. Düse (14) nach einem der vorgehenden Ansprüche, **dadurch gekennzeichnet, dass** die ersten Betätigungseinrichtungen (20) und die zweiten Betätigungseinrichtungen (20') gewinkeltes Metallblech sind.

12. Flugzeug umfassend eine Düse (14) nach Anspruch 1.

13. Verfahren zum Variieren einer variierbaren konvergent-divergenten Abgasdüse (14) für ein Strahltriebwerk (1), das die folgenden Schritte umfasst:
a) Bereitstellen einer Vielzahl erster Klappeneinrichtungen (18) und einer Vielzahl zweiter Klappeneinrichtungen (18'),
b) Betätigen der Vielzahl von ersten Klappeneinrichtungen (18) zum Variieren des ersten Querschnittsbereichs (A1) der Düsen (14) zwischen einer ersten Position und einer zweiten Position durch erste Betätigungseinrichtungen (20, 32, 20h) und Betätigen der Vielzahl von zweiten Klappeneinrichtungen (18') zum Variieren des zweiten Querschnittsbereichs (A2) der Düsen (14) zwischen einer ersten Position und einer zweiten Position durch zweite Betätigungseinrichtungen (20',32, 20'h,), wobei die Vielzahl der ersten Klappeneinrichtungen (18) jeweils dritte Klappeneinrichtungen (24) und vierte Klappeneinrichtungen (26) umfassen, wobei die Vielzahl der zweiten Klappeneinrichtungen (18') jeweils fünfte Klappeneinrichtungen (24') und sechste Klappeneinrichtungen (26') umfassen, wobei die dritten Klappeneinrichtungen (24) die vierten Klappeneinrichtungen (26) überlagern und auf sie einwirken, und wobei die fünften Klappeneinrichtungen (24') die sechsten Klappeneinrichtungen (26') überlagern und auf sie einwirken,
wobei die ersten Betätigungseinrichtungen (20) zwei Gleitflächen (28', 30') umfassen, wobei die zweiten Betätigungseinrichtungen (20') zwei Gleitflächen (28', 30') umfassen, wobei die beiden Gleitflächen (28, 30) der ersten Betätigungseinrichtung (20') winklig zueinander mit einem Winkel (a) angeordnet sind und die beiden Gleitflächen (28', 30') der zweiten Betätigungseinrichtung (20') unter dem gleichen Winkel (a) winklig zueinander angeordnet sind, wobei der erste Querschnittsbereich (A1) und der zweite Querschnittsbereich (A2)
sechseckig oder
fünfeckig und asymmetrisch oder
quadratisch, symmetrisch und mit gleichen Winkeln (a) oder
rechteckig, symmetrisch und mit gleichen Winkeln (a) oder
dreieckig, symmetrisch und mit gleichen Winkeln (a) sind,
c) Bereitstellen eines kontinuierlichen Kontakts zwischen benachbarten ersten Klappeneinrichtungen (18) über eine erste Gleitfläche (22, 22') jeweiliger erster Klappeneinrichtungen (18) während dem Variieren und Bereitstellen eines kontinuierlichen Kontakts zwischen benachbarten zweiten Klappeneinrichtungen (18') über eine zweite Gleitfläche (22'", 22"") jeweiliger zweiter Klappeneinrichtungen (18) während dem Variieren.

14. Verfahren nach Anspruch 13, ferner umfassend den folgenden Schritt: d) Betätigen einer dritten Klappeneinrichtung (24) der ersten Klappeneinrichtungen (18) durch die ersten Betätigungseinrichtungen (20), um das Variieren bereitzustellen und Betätigen einer fünften Klappeneinrichtung (24') der zweiten Klappeneinrichtungen (18') durch die zweiten Betätigungseinrichtungen (20), um das Variieren bereitzustellen.

15. Verfahren nach Anspruch 13 oder 14, ferner umfassend die folgenden Schritte:
e) Bereitstellen einer Innenfläche auf einer vierten Klappeneinrichtung (26) und auf einer sechsten Klappeneinrichtung (26'),
f) Betätigen der vierten Klappeneinrichtungen (26) und der sechsten Klappeneinrichtungen (26') durch eine entgegenwirkende Strahlenstromkraft vom Strahltriebwerk (1) unter Verwendung.

16. Verfahren nach einem der Ansprüche 13 bis 15, wobei der Schritt b) durch die dritten Klappeneinrichtungen (24), die die vierten Klappeneinrichtungen (26) überlagern, durchgeführt wird, wobei die dritten Klappeneinrichtungen (24) auf die vierten Klappeneinrichtungen (26) einwirken, und durch die fünften Klappeneinrichtungen (24'), die die sechsten Klappeneinrichtungen (26') überlagern, wobei die fünften Klappeneinrichtungen (24') auf die sechsten Klappeneinrichtungen (26') einwirken.

## Revendications

1. Tuyère d'échappement convergente-divergente variable (14) pour un moteur à réaction (1), comprenant une structure fixe (16), une première zone de section transversale (A1), une deuxième zone de section transversale (A2), une pluralité de premiers moyens de volet (18) pouvant être connectés de manière pivotante à la structure fixe (16), une pluralité de deuxièmes moyens de volet (18') étant connectés de manière pivotante à la pluralité de premiers moyens de volet (18), un premier moyen d'actionnement (20, 20h) étant agencé pour actionner lesdits premiers moyens de volet (18) pour faire varier les buses (14) de la première zone de section transversale (A1) entre une première position et une deuxième position, un deuxième moyen d'actionnement (20', 20'h) étant agencé pour actionner lesdits deuxièmes moyens de volet (18') pour faire varier les buses (14) de la deuxième zone de section transversale (A2) entre une première position et une deuxième position
**caractérisée en ce que**
ledit premier moyen d'actionnement (20) comprend deux surfaces coulissantes (28, 30), ledit deuxième moyen d'actionnement (20') comprend deux surfaces coulissantes (28', 30'), les deux surfaces coulissantes (28, 30) dudit premier moyen d'actionnement (20) sont disposées angulairement les unes par rapport aux autres avec un angle (α), et les deux surfaces glissantes (28', 30') dudit deuxième moyen d'actionnement (20') sont disposées angulairement les unes par rapport aux autres avec le même angle (α),
le premier moyen de volet respectif (18) comprend un troisième moyen de volet (24) et un quatrième moyen de volet (26), chacun comprenant une première surface coulissante (22, 22') disposée en contact continu avec des premiers moyens de volet adjacents (18) pendant ladite variation,
le deuxième moyen de volet respectif (18') comprend un cinquième moyen de volet (24') et un sixième moyen de volet (26'), comprenant chacun une deuxième surface coulissante (22'", 22'"") disposée en contact continu avec des deuxièmes moyens de volet adjacents (18 ') pendant ladite variation,
dans laquelle le troisième moyen de volet (24) est agencé pour être en dit contact continu avec un quatrième moyen de volet adjacent (26) si bien que le troisième moyen de volet (24), à l'intérieur d'une zone définie par ladite première surface coulissante (22, 22'), recouvre le quatrième moyen de volet (26), dans laquelle le cinquième moyen de volet (24') est agencé pour être en dit contact continu avec un sixième moyen de volet adjacent (26') si bien que le cinquième moyen de volet (24'), dans une zone définie par ladite surface coulissante (22'", 22""), recouvre le sixième moyen de volet (26'),
dans laquelle la première zone de section transversale (A1) et la deuxième zone de section transversale (A2) sont
hexagonales ou
pentagonales et asymétriques, ou
carrées, symétriques et à angles égaux (a), ou
rectangulaires, symétriques et à angles égaux (a), ou
triangulaires, symétriques et à angles égaux (a).

2. Tuyère (14) selon la revendication 1, **caractérisé en ce que** le troisième moyen de volet (24) est constitué dudit premier moyen d'actionnement (20) et **en ce que** le cinquième moyen de volet (24') est constitué de dudit deuxième moyen d'actionnement (20').

3. Tuyère (14) selon l'une quelconque des revendications précédentes, **caractérisée en ce que** le nombre des troisièmes moyens de volet (24) est égal au nombre des quatrièmes moyens de volet (26) et **en ce que** le nombre de cinquièmes moyens de volet (24') est égal au nombre de sixièmes moyens de volet (26').

4. Tuyère (14) selon l'une quelconque des revendications précédentes, **caractérisée en ce que** le premier moyen d'actionnement (20) et le deuxième moyen d'actionnement (20') comprennent un actionneur allongé (32).

5. Tuyère (14) selon la revendication 4, **caractérisé en ce que** l'actionneur allongé (32) est un système hydraulique.

6. Tuyère (14) selon la revendication 1, **caractérisé en ce que** ledit angle (a) est environ 120°.

7. Tuyère (14) selon l'une quelconque des revendications précédentes, **caractérisée en ce que** les moyens de volets (18, 18', 24, 24', 26, 26') comprennent un matériau élastique.

8. Tuyère (14) selon l'une quelconque des revendications précédentes, **caractérisée en ce que** ledit premier moyen de volet (18, 24, 26) peut être relié de manière pivotante à la structure fixe avec des moyens d'articulation, et **en ce que** ledit deuxième moyen de volet (18', 24', 26') est relié de manière pivotante au premier moyen de volet (18, 24, 26) avec des moyens d'articulation.

9. Tuyère (14) selon l'une quelconque des revendications précédentes, **caractérisée en ce qu'elle** comprend en outre un premier joint d'étanchéité (36) disposé entre le troisième moyen de volet (24) et le quatrième moyen de volet (26) pour sceller lesdites premières surfaces coulissantes (22, 22') et **en ce qu'**elle comprend en outre un deuxième joint d'étanchéité (36') disposé entre le cinquième moyen de volet (24') et le sixième moyen de volet (26') pour sceller lesdites deuxièmes surfaces coulissantes (22'", 22"")

10. Tuyère (14) selon l'une quelconque des revendications précédentes, **caractérisée en ce qu'**un premier bord aval (38) formant ladite première zone (A1) et un deuxième bord aval (38') formant ladite deuxième zone (A2) sont symétriques.

11. Tuyère (14) selon l'une quelconque des revendications précédentes, **caractérisée en ce que** le premier moyen d'actionnement (20) et le deuxième moyen d'actionnement (20') sont en tôle angulaire.

12. Aéronef comprenant une tuyère (14) selon la revendication 1.

13. Procédé pour faire varier une tuyère d'échappement convergente-divergente variable (14) pour un moteur à réaction (1), comprenant les étapes consistant à :
a) fournir une pluralité de premiers moyens de volet (18) et une pluralité de deuxièmes moyens de volet (18'),
b) actionner ladite pluralité de premiers moyens de volet (18) pour faire varier les tuyères (14) de la première zone de section transversale (A1) entre en première position et une deuxième position au moyen d'un premier moyen d'actionnement (20, 32, 20h) et actionner ladite pluralité de deuxièmes moyens de volet (18') pour faire varier les tuyères (14) de la deuxième zone de section transversale (A2) entre en première position et une deuxième position au moyen d'un deuxième moyen d'actionnement (20', 32, 20'h,), la pluralité respective de premiers moyens de volet (18) comprenant un troisième moyen de volet (24) et un quatrième moyen de volet (26), la pluralité respective de deuxièmes moyens de volet (18') comprenant un cinquième moyen de volet (24') et un sixième moyen de volet (26'), le troisième moyen de volet (24) recouvrant et agissant sur le quatrième moyen de volet (26), et le cinquième moyen de volet (24') recouvrant et agissant sur le sixième moyen de volet (26'),
dans lequel ledit premier moyen d'actionnement (20) comprend deux surfaces coulissantes (28, 30), ledit deuxième moyen d'actionnement (20') comprend deux surfaces coulissantes (28', 30'), les deux surfaces coulissantes (28, 30) dudit premier moyen d'actionnement (20) sont disposées angulairement les unes par rapport aux autres avec un angle (α), et les deux surfaces glissantes (28', 30') dudit deuxième moyen d'actionnement (20') sont disposées angulairement les unes par rapport aux autres avec le même angle (α), dans lequel la première zone de section transversale (A1) et la deuxième zone de section transversale (A2) sont
hexagonales ou
pentagonales et asymétriques, ou
carrées, symétriques et à angles égaux (α), ou
rectangulaires, symétriques et à angles égaux (α), ou
triangulaires, symétriques et à angles égaux (α),
c) fournir un contact continu entre des premiers moyens de volet adjacents (18) via une première surface coulissante (22, 22') de premiers moyens de volet respectifs (18) pendant ladite variation et fournir un contact continu entre des deuxièmes moyens de volet adjacents (18') via une deuxième surface coulissante (22'", 22"") de deuxièmes moyens de volet respectifs (18') pendant ladite variation.

14. Procédé selon la revendication 13, comprenant en outre l'étape :
d) actionner un troisième moyen de volet (24) des premiers moyens de volet (18) au moyen du premier moyen d'actionnement (20) pour fournir ladite variation et actionner un cinquième moyen de volet (24 ') des deuxièmes moyens de volet (18') au moyen du deuxième moyen d'actionnement (20) pour fournir ladite variation.

15. Procédé selon la revendication 13 ou 14, comprenant en outre les étapes consistant à:
e) fournir une surface intérieure sur un quatrième moyen de volet (26) et sur un sixième moyen de volet (26'),
f) actionner ledit quatrième moyen de volet (26) et ledit sixième moyen de volet (26') au moyen d'une force de courant de jet contrebalancée par le moteur à réaction (1) pendant l'utilisation.

16. Procédé selon l'une quelconque des revendications 13 à15, dans lequel l'étape b) est exécutée par le troisième moyen de volet (24) qui recouvre le quatrième moyen de volet (26), dans lequel le troisième moyen de volet (24) agit sur le quatrième moyen de volet (26), et par le cinquième moyen de volet (24') qui recouvre le sixième moyen de volet (26'), dans lequel le cinquième moyen de volet (24') agit sur le sixième moyen de volet (26').
